# FASCICULE DE BREVET EUROPEEN

(11) **EP 2 942 735 B1**
(45) Date de publication et mention de la délivrance du brevet: **17.04.2019**
(21) Numéro de dépôt: 15305649.4
(22) Date de dépôt: 28.04.2015
(51) Int. Cl.: G06K 7/10, H01Q 7/00

(54) **LECTEUR DE CARTE À PUCE SANS CONTACT**
KONTAKTLOSER CHIPKARTENLESER
CONTACTLESS SMART-CARD READER

(30) Priorité: 30.04.2014 FR 1453954
(43) Date de publication de la demande: 11.11.2015
(73) Titulaire: Kapelse, 54600 Villers Les Nancy (FR)
(72) Inventeur: Deborgies, Luc, 78000 Versailles (FR)
(74) Mandataire: Rhein, Alain

(56) Documents cités:
- WO-A1-2014/038209
- WO-A2-2007/011934
- US-A1- 2006 022 887

## Description

### Domaine technique et état de l'art

Dans le domaine des lecteurs de cartes à puce, l"invention concerne un nouveau lecteur bien adapté pour la lecture de carte à puce sans contact en champ très proche. L'usage des cartes à puce, et des lecteurs associés, est aujourd'hui courant pour le paiement par carte bancaire, l'identification des personnes ou la transmission de données, dans le domaine de la santé ou plus généralement du contrôle d'accès par exemple.

Par carte à puce on entend ici et dans tout ce qui suit un objet portable comprenant une puce (ou circuit intégré) enchâssé dans un support de forme générale plane et de faible épaisseur. Le terme carte est utilisé ici de manière générale pour parler d'objets de toutes tailles, qui peuvent aussi être appelés carte, ticket, pastille, etc., selon leur taille et leur forme.

La puce dans la carte comprend notamment une mémoire de données, et une antenne comprenant une bobine plane destinée à échanger des signaux électromagnétiques avec un lecteur de carte. Les signaux électromagnétiques permettent non seulement l'échange de données entre la carte à puce et le lecteur, mais également la téléalimentation de la carte par induction magnétique. La carte mémorise notamment des données identifiant son propriétaire et / ou ses biens (compte-bancaire, données d'abonnement à un service, etc.).

De manière connue, un lecteur comprend un boîtier externe de forme générale parallélépipédique présentant une face avant sur laquelle est (sont) positionné(s) un écran d'affichage et / ou une zone de saisie d'information telle qu'un clavier ou une zone tactile. A l'intérieur du boîtier sont agencés une antenne d'émission/réception de signaux électromagnétiques et des circuits électroniques agencés pour communiquer avec la carte à puce.

La bobine de l'antenne à l'intérieur du boîtier est généralement formée d'un fil métallique comprenant une pluralité d'enroulements coaxiaux et coplanaires, formant une spirale plane qui est fixée sur un support plan. Pour les applications envisagées, l'antenne émet volontairement un faible signal, pour ne pas perturber l'environnement immédiat du lecteur. On parle de communication NFC (pour Near Field Communication), ou communication en champ proche. Dans ces conditions, pour que le lecteur établisse un contact avec la carte à puce, la carte à puce doit être plaquée sur le boîtier, ou quasiment, dans un plan parallèle aux enroulements de la bobine.

La bobine peut être tracée sur un circuit imprimé de carte électronique. Cette réalisation est simple et peu onéreuse, mais l'utilisation d'un lecteur intégrant une telle bobine est très contraignante. En effet, en pratique avec un tel lecteur, une carte à puce à lire doit être soit posée sur la face de dessus du boîtier du lecteur, et dans ce cas l'utilisateur perd l'usage du clavier ou de l'écran du lecteur, soit plaquée contre la face de dessous du lecteur et dans ce cas l'utilisateur doit retourner le lecteur pour bien positionner sa carte à puce.

L'autre mode de réalisation, l'adjonction d'une bobine en tant que composant externe ou la réalisation d'une bobine spécifique est en pratique compliquée et onéreuse, du point de vue procédé de fabrication. En effet, la réalisation de la bobine suppose, au cours du procédé de fabrication du lecteur, d'enrouler un fil métallique pour former les spires de la bobine puis de venir connecter les fils de la bobine aux circuits électroniques formant les autres composants de l'antenne. Ceci suppose une intervention manuelle, au moins pour connecter la bobine. De même pour une bobine externe, il faudra prévoir des moyens de fixation et de connexion.

Le document WO 2007/011934 A2 décrit un système d'antennes multi-couches pour un lecteur RFID. Ce système consiste en deux enroulements distincts connectés électriquement par un via.

### Description de l'invention

L'invention propose un nouveau lecteur de carte à puce sans contact, ne présentant pas les inconvénients des lecteurs connus.

Plus précisément, l'invention propose un lecteur adapté pour la lecture sans contact d'une carte à puce, lecteur comprenant deux cartes électroniques (31, 32) solidarisées entre elles par des connecteurs électriques (34), une antenne d'émission / réception de signaux électromagnétiques comprenant une bobine comprenant une pluralité d'enroulements coaxiaux, lecteur caractérisé en ce que un enroulement de la bobine est constitué de :
- une première piste (21) tracée sur la première carte électronique (31),
- une deuxième piste tracée sur la deuxième carte électronique (32), une première extrémité de la deuxième piste étant reliée électriquement à une première extrémité de la première piste par un élément de connexion interne d'un premier connecteur (34) et une deuxième extrémité de la deuxième piste étant reliée électriquement à un élément de connexion interne d'un deuxième connecteur (34).

Si la bobine comprend plusieurs enroulements, deux enroulements successifs de la bobine sont reliés par un élément de connexion du deuxième connecteur (34).

Les connecteurs relient électriquement une carte électronique à l'autre, ils permettent par exemple l'alimentation électrique d'une carte électronique à partir d'une alimentation électrique de l'autre carte électronique ainsi que l'échange de signaux électriques entre des composants situés sur des cartes électroniques distinctes. Les connecteurs forment également chacun une cale, permettant de maintenir l'écart d'une carte électronique par rapport à l'autre. Egalement, dans le cadre de l'invention, des éléments de connexion interne des connecteurs forment des portions d'enroulements de la bobine.

Les pistes sur les cartes électroniques nécessaires à la réalisation de la bobine sont dessinées lors de la réalisation des dites cartes, la réalisation de ces pistes engendre un surcoût de réalisation quasi-nul. Les connecteurs entre les cartes électroniques sont quant à eux préexistants, tout au plus est-il nécessaire de choisir des connecteurs comprenant un plus grand nombre d'éléments internes de connexion. Les enroulements sont formés par le simple couplage des deux cartes électroniques par l'intermédiaire des connecteurs, couplage fait par ailleurs. La réalisation de la bobine ne nécessite aucune opération additionnelle lors du montage du lecteur. Le coût de l'opération de montage est ainsi bien inférieur à la réalisation d'une bobine par enroulement d'un fil ou à la fixation d'une bobine externe.

Dans le lecteur selon l'invention, au moins une carte électronique peut également comprendre :
- des moyens de guidage pour guider une carte à puce le long de la dite carte électronique jusqu'à une position de contact, et
- des circuits électroniques agencés pour communiquer avec contact avec une carte à puce en position de contact.

Ainsi le lecteur est agencé pour lire des cartes sans contact, des cartes avec contact ou même des cartes mixtes, c'est-à-dire avec et sans contact. Si une carte mixte est positionnée perpendiculaire à un axe magnétique de la bobine, c'est-à-dire perpendiculaire aux cartes électroniques, l'axe magnétique de la bobine de la carte à puce étant parallèle à l'axe magnétique de la bobine de l'antenne du lecteur de carte à puce, la bobine de la carte à puce va recevoir le champ magnétique émis par la bobine de l'antenne du lecteur et la puce de la carte va réagir en conséquence. La puce de la carte va ainsi communiquer sans contact avec les circuits électroniques du lecteur. A l'inverse, si la carte mixte est insérée dans le lecteur, le long de l'une des cartes électroniques, la puce de la carte vient au contact d'une zone de contact d'un circuit de lecture de la carte électronique et une communication s'établit par contact entre la puce et le circuit de lecture. Comme l'axe magnétique de la bobine de la carte mixte est perpendiculaire au champ magnétique de la bobine du lecteur, l'antenne de la carte reçoit trop peu de signal et ne réagit pas. Ainsi, sur la carte électronique, du fait de la position particulière de la bobine de l'antenne du lecteur selon l'invention, la sélection se fait naturellement entre les circuits de communication sans contact et les circuits de communication avec contact, sans qu'il soit nécessaire de prévoir un moyen de gestion de conflit entre les deux.

Selon un mode de réalisation, le lecteur comprend un boîtier (10) de forme générale polyédrique et comprenant une face de détection (14) ; les cartes électroniques (31, 32) sont positionnées dans le boîtier de sorte que l'axe magnétique de la bobine soit perpendiculaire à la face de détection. Ainsi, pour lire une carte sans contact, il suffit de la mettre en contact avec la face de détection, la carte sans contact est ainsi immédiatement orientée dans le champ émis par la bobine du lecteur.

Selon un mode de réalisation d'un lecteur adapté pour lire des cartes avec et sans contact, le boîtier peut comprendre également une ou deux fentes (14) agencées sur la face de détection et parallèle (s) aux cartes électroniques (31, 32) pour l'insertion d'une carte à puce à contact.

Le boîtier peut comprendre sur une face principale (11) un moyen d'affichage (12) d'une information et / ou un moyen de saisie (13) d'une information. De préférence, ladite face principale est adjacente à la face de détection. Ainsi, la face de détection étant dans un plan distinct du plan de la face principale, il est ainsi possible de positionner facilement la carte à puce sur le lecteur tout en conservant l'usage de l'écran et / ou de la zone de saisie d'information pendant la communication. De préférence, la face de détection est une face de dessus, une face avant ou une face de côté du boîtier, selon la position de la face principale. Ainsi, le positionnement de la carte à puce sur la face de détection est encore plus aisé.

### Brève description des figures

L'invention sera mieux comprise, et d'autres caractéristiques et avantages de l'invention apparaîtront à la lumière de la description qui suit d'un exemple de lecteurs de carte à puce selon l'invention. Ces exemples sont donnés à titre non limitatif. La description est à lire en relation avec les dessins annexés dans lesquels :
- la figure 1 est une vue en perspective d'un lecteur selon l'invention,
- la figure 2 est une vue partielle d'un bloc électronique pour un lecteur selon la figure 1

Pour tout ce qui suit, on définit les notions "avant", "dessous", "arrière", "de côté" pour un boîtier présenté dans une position normale d'utilisation, c'est-à-dire dans une position où la face principale, sur laquelle est positionné le moyen d'affichage ou le moyen de saisie manuelle d'information, est définie comme étant la face avant.

### Description d'un mode de réalisation de l'invention

Sur les figures est représenté un mode particulier de réalisation d'un lecteur de carte selon l'invention agencé pour lire :
- avec contact, une carte à puce destinée à rester à l'intérieur du boîtier (ouverture du boîtier nécessaire pour la retirer du lecteur). Il s'agit par exemple d'une carte identifiant le responsable du lecteur ; par exemple dans une application santé, le fournisseur du lecteur, le patient conservant le lecteur à domicile, le pharmacien conservant le lecteur à son officine, etc.
- avec contact, une ou deux cartes à puce susceptibles d'être insérées puis retirées du lecteur à chaque transaction (pour cela les cartes sont accessibles à l'extérieur du boîtier sans qu'il soit nécessaire d'ouvrir le boîtier). Il s'agit par exemple d'une carte identifiant un tiers, par exemple dans le cas d'une application santé, un professionnel de santé intervenant au domicile d'un patient, le patient, etc.
- sans contact, une carte à puce appliquée sur la face de détection.

Une même carte, dite carte mixe, peut être utilisée, au choix de l'utilisateur, avec ou sans contact.

Dans l'exemple représenté, le boîtier 10 a la forme d'un hexaèdre. Sur la face principale 11 (ou face avant en position normale d'utilisation) sont enchâssés un écran d'affichage 12 et un clavier 13 de saisie manuelle. Le boîtier comprend également une face de détection 14, contre laquelle l'utilisateur va venir positionner une carte à puce pour qu'elle soit lue sans contact. La face de détection 14 est une face adjacente à la face principale du boîtier, dans l'exemple représenté la face de dessus. La face de détection 14 comprend deux fentes 15 pour permettre, selon l'application envisagée, l'insertion ponctuelle d'une ou deux cartes à puce à contact.

A l'intérieur du boîtier 10 sont positionnées deux cartes électroniques 31, 32 positionnées parallèles l'une par rapport à l'autre et s'étendant depuis la face de détection 14 selon une direction perpendiculaire à la face de détection. Les deux cartes électroniques 31, 32 sont solidarisées l'une à l'autre par des connecteurs 34 : ils assurent la connexion mécaniques et électrique des deux cartes électroniques et en même temps maintiennent l'écart entre les deux cartes électroniques. Les connecteurs 34 ont plusieurs éléments de connexion interne, pour relier certaines pistes d'une carte à des pistes de l'autre carte. Les connecteurs permettent ainsi par exemple l'alimentation électrique d'une carte à partir de l'alimentation de l'autre carte ; ils permettent aussi à des circuits électroniques d'une carte de communiquer avec des circuits électroniques de l'autre carte ; ils permettent enfin la réalisation aisée d'une bobine selon l'invention, comme on le verra mieux plus loin.

Les deux cartes électroniques 31, 32 forment un bloc électronique 30 et définissent entre elles un volume dans lequel est positionnée une troisième carte électronique 33. Sur la première carte électronique 31 sont fixés des circuits électroniques agencés pour la lecture d'une carte avec contact et des circuits électroniques agencés pour la lecture d'une carte sans contact. Sur la deuxième carte électronique 32 et sur la troisième carte électronique 33 sont fixés des circuits électroniques agencés pour la lecture d'une carte avec contact. Par souci de clarté, les circuits électroniques, connus par ailleurs, n'ont pas été représentés sur les dessins.

Les trois cartes électroniques sont agencées pour guider une carte à puce lors de son insertion dans le boîtier jusqu'à une position de contact et pour maintenir la carte insérée dans la position de contact. Pour cela, dans l'exemple représenté, les cartes électroniques comprennent chacune deux rainures 35, 36 (moyens de guidage) dans lesquelles peut coulisser une carte à puce. Les rainures sont agencées sur la première carte électronique et sur la deuxième carte électronique de sorte que les cartes à puce insérées le long des cartes électroniques soient positionnées à l'extérieur du bloc électronique 30. Ainsi, lorsque deux ou trois cartes avec contact sont positionnées simultanément dans le lecteur, la lecture de l'une ne perturbe pas le fonctionnement de l'autre.

A l'intérieur du boîtier également, est positionné une bobine 20 d'une antenne d'émission/ réception de signaux électromagnétiques ; la bobine 20 comprend une pluralité d'enroulements 21 coaxiaux ayant un axe magnétique perpendiculaire à la face de détection.

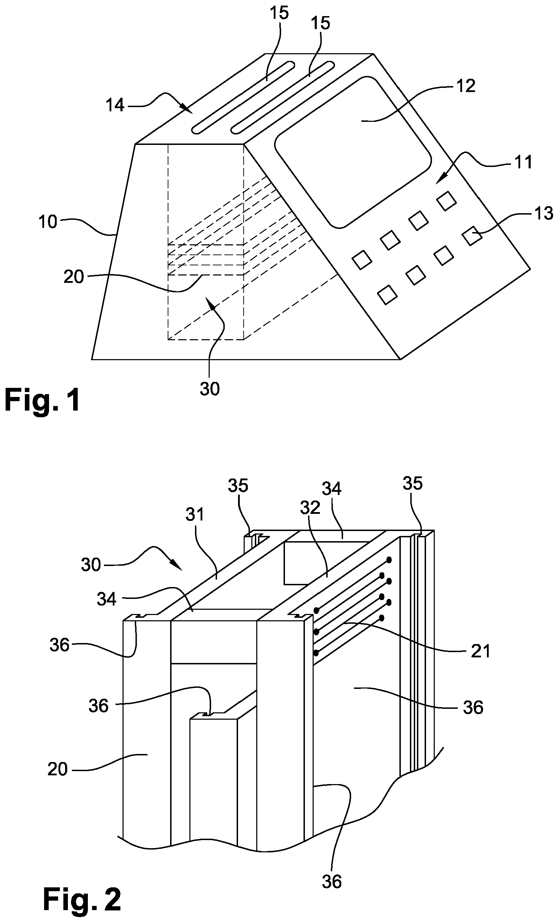

Dans l'exemple de la figure 1, la bobine est réalisée par un fil conducteur enroulé autour d'une section du bloc électronique 30 parallèle à la face de détection.

Dans l'exemple représenté figure 2, chaque enroulement de la bobine est réalisé par :
- une première piste 21 tracée sur la première carte électronique 31,
- une deuxième piste tracée sur la deuxième carte électronique 32, une première extrémité de la deuxième piste étant reliée électriquement à une première extrémité de la première piste par un élément de connexion interne d'un premier connecteur 34 et une deuxième extrémité de la deuxième piste étant reliée électriquement à un élément de connexion interne d'un deuxième connecteur 34.

A titre d'exemple pratique, une bobine de six spires a été réalisée avec :
- six pistes 21, de longueur de l'ordre de 70 mm, tracées sur la première carte électronique 31, d'épaisseur de l'ordre de 1,6 mm
- six pistes similaires, tracées sur la deuxième carte électronique 32,
- six pistes internes à chaque connecteur 34, de longueur de l'ordre de 7 mm.

Chaque enroulement ainsi obtenu a une section sensiblement rectangulaire de dimensions environ 70 mm par 10,2 mm.

Dans l'exemple représenté, le boîtier a une face de dessous ayant une surface sensiblement plus grande que la surface de la face de détection ; la face de dessous sert ainsi de pied pour le lecteur pour améliorer l'équilibre du lecteur.

De plus, le boîtier peut comprendre, sur une face (sur les figures, la face de dessous) parallèle à la face de détection, une ouverture (non représentée) agencée pour insérer une carte à puce le long de la troisième carte électronique. Cette carte à puce est destinée à rester à demeure ou quasiment dans le boîtier. Un cache ou couvercle peut être prévu pour fermer l'ouverture après insertion de la carte.

Un isolant électromagnétique peut encore être prévu entre les cartes électroniques 31, 32, 33, pour atténuer, si nécessaire, toute influence électromagnétique d'une carte électronique sur l'autre.

### NOMENCLATURE

- 10: boîtier
11 face principale
12 moyen d'affichage, par exemple un écran
13 moyen de saisie manuelle, par exemple un clavier comprenant une pluralité de touches
14 face de détection
15 fentes
- 20: bobine d'antenne émission / réception électromagnétique
21 enroulements
- 30: bloc électronique
31 première carte électronique
32 deuxième carte électronique
33 troisième carte électronique
34 double fonction : cales et connecteurs électriques
35, 36 rainures de guidage

## Revendications

1. Lecteur adapté pour la lecture sans contact d'une carte à puce, ledit lecteur comprenant deux cartes électroniques (31, 32) solidarisées entre elles par des connecteurs électriques (34), une antenne d'émission / réception de signaux électromagnétiques comprenant une bobine comprenant une pluralité d'enroulements coaxiaux, ledit lecteur étant **caractérisé en ce que** un enroulement de la bobine est constitué de :
• une première piste (21) tracée sur la première carte électronique (31),
• une deuxième piste tracée sur la deuxième carte électronique (32), une première extrémité de la deuxième piste étant reliée électriquement à une première extrémité de la première piste par un élément de connexion interne d'un premier connecteur (34) et une deuxième extrémité de la deuxième piste étant reliée électriquement à un élément de connexion interne d'un deuxième connecteur (34).

2. Lecteur selon la revendication 1 dans lequel deux enroulements successifs de la bobine sont reliés par un élément de connexion du deuxième connecteur (34).

3. Lecteur selon l'une des revendications précédentes dans lequel au moins une desdites cartes électroniques comprend :
• des moyens de guidage pour guider une carte à puce le long de la dite carte électronique jusqu'à une position de contact, et
• des circuits électroniques agencés pour communiquer avec contact avec une carte à puce.

4. Lecteur selon l'une des revendications précédentes, comprenant un boîtier (10) de forme générale polyédrique et comprenant une face de détection (14), boîtier dans lequel les cartes électroniques (31, 32) sont positionnées de sorte que l'axe magnétique de la bobine soit perpendiculaire à la face de détection.

5. Lecteur selon l'une des revendications 3 ou 4 dans lequel le boîtier comprend également une ou deux fentes (14) agencées sur la face de détection et parallèle (s) aux cartes électroniques (31, 32) pour l'insertion d'une carte à puce à contact.

6. Lecteur selon l'une des revendications précédentes comprenant également une troisième carte électronique (33) sur laquelle sont fixés des circuits électroniques agencés pour communiquer avec une carte à puce avec contact, la dite troisième carte électronique comprenant des moyens de guidage (35, 36) pour guider une carte à puce le long de la troisième carte électronique lors de son insertion dans le boîtier jusqu'à une position de contact et des moyens pour maintenir la carte insérée dans la position de contact, la troisième carte électronique s'étendant entre la première et la deuxième carte électronique.

7. Lecteur selon la revendication 6 dans lequel le boîtier comprend, sur une face parallèle à la face de détection, une ouverture agencée pour insérer une carte à puce le long de la troisième carte électronique.

8. Lecteur selon l'une des revendications précédentes dans lequel le boîtier comprend sur une face principale (11) un moyen d'affichage (12) d'une information et / ou un moyen de saisie (13) d'une information, ladite face principale étant adjacente à la face de détection.

## Patentansprüche

1. Leser, der ausgelegt ist zum kontaktlosen Lesen einer Chipkarte, wobei der Le ser zwei elektronische Karten (31, 32) umfasst, die untereinander durch elektrische Verbinder (34) fest miteinander verbunden sind, wobei eine Antenne zum Senden/Empfangen von elektromagnetischen Signalen eine Spule umfasst, umfassend eine Vielzahl von koaxialen Wicklungen, wobei der Leser **dadurch gekennzeichnet ist, dass** eine Wicklung der Spule besteht aus:
- einer ersten Spur (21), die auf der ersten elektronischen Karte (31) angelegt ist,
- eine zweite Spur, die auf der zweiten elektronischen Karte (32) angelegt ist, wobei ein erstes Ende der zweiten Spur elektronisch an ein erstes Ende der ersten Spur durch ein internes Verbindungselement eines ersten Verbinders (34) verbunden ist, und wobei ein zweites Ende der zweiten Spur elektronisch mit einem internen Verbindungselement eines zweiten Verbinders (34) verbunden ist.

2. Leser nach Anspruch 1, wobei zwei aufeinander folgende Windungen der Spule durch ein Verbindungselement des zweiten Verbinders (34) verbunden sind.

3. Leser nach einem der vorhergehenden Ansprüche, wobei mindestens eine der elektronischen Karten Folgendes umfasst:
- Führungsmittel, um eine Chipkarte entlang der elektronischen Karte bis zu einer Kontaktposition zu führen, und
- elektronische Schaltungen, die angeordnet sind, um mit Kontakt mit einer Chipkarte zu kommunizieren.

4. Leser nach einem der vorhergehenden Ansprüche, umfassend ein Gehäuse (10) mit einer im Allgemeinen polyedrischen Form und umfassend eine Nachweisseite (14), Gehäuse, in dem die elektronischen Karten (31, 32) derart positioniert sind, dass die magnetische Achse der Spule senkrecht zur Nachweisseite ist.

5. Leser nach einem der Ansprüche 3 oder 4, wobei das Gehäuse auch einen oder zwei Schlitze (14) umfasst, die auf der Nachweisseite angeordnet und parallel zu den elektronischen Karten (31, 32) zur Einführung einer Kontaktchipkarte sind.

6. Leser nach einem der vorhergehenden Ansprüche, umfassend auch eine dritte elektronische Karte (33), auf der elektronische Schaltungen fixiert sind, die angeordnet sind, um mit einer Kontaktchipkarte zu kommunizieren, wobei die dritte elektronische Karte Führungsmittel (35, 36) umfasst, um eine Chipkarte entlang der dritten elektronischen Karte bei ihrer Einführung in das Gehäuse bis zu einer Kontaktposition zu führen, und Mittel, um die eingeführte Karte in der Kontaktposition zu halten, wobei sich die dritte elektronische Karte zwischen der ersten und der zweiten elektronischen Karte erstreckt.

7. Leser nach Anspruch 6, wobei das Gehäuse auf einer Seite parallel zur Nachweisseite eine Öffnung umfasst, die angeordnet ist, um eine Chipkarte entlang der dritten elektronischen Karte zu einzuführen.

8. Leser nach einem der vorhergehenden Ansprüche, wobei das Gehäuse auf einer Hauptseite (11) ein Mittel zur Anzeige (12) einer Information und/oder ein Mittel zur Erfassung (13) einer Information umfasst, wobei die Hauptseite der Nachweisseite benachbart ist.

## Claims

1. A reader suitable for contactless reading of a chip card, said reader comprising two electronic cards (31, 32) secured to one another via electrical connectors (34), an antenna for sending/receiving electromagnetic signals comprising a coil comprising a plurality of coaxial windings, said reader being **characterized in that** a winding of the coil is made up of:
• a first track (21) drawn on the first electronic card (31),
• a second track on the second electronic card (32), a first end of the second track being electrically connected to a first end of the first track by an internal connection element of a first connector (34) and a second end of the second track being electrically connected to an internal connection element of a second connector (34).

2. The reader according to claim 1, wherein two successive windings of the coil are connected by a connection element of the second connector (34).

3. The reader according to one of the preceding claims, wherein at least one of said electronic cards comprises:
• guide means for guiding a chip card along said electronic card to a contact position, and
• electronic circuits arranged to communicate with contact with a chip card.

4. The reader according to one of the preceding claims, comprising a generally polyhedral housing (10) and comprising a detection face (14), in which housing the electronic cards (31, 32) are positioned such that the magnetic axis of the coil is perpendicular to the detection face.

5. The reader according to one of claims 3 or 4, wherein the housing also comprises one or two slits (14) arranged on the detection face and parallel to the electronic cards (31, 32) for the insertion of a chip card with contact.

6. The reader according to one of the preceding claims also comprising a third electronic card (33) on which electronic circuits are fixed arranged to communicate with a chip card with contact, said third electronic card comprising guide means (35, 36) for guiding a chip card along the third electronic card when it is inserted into the housing up to a contact position and means for keeping the card inserted in the contact position, the third electronic card extending between the first and second electronic cards.

7. The reader according to claim 6, wherein the housing comprises, on a face parallel to the detection face, an opening arranged to insert a chip card along the third electronic card.

8. The reader according to one of the preceding claims, wherein the housing comprises, on a main face (11), a display means (12) for displaying information and/or an entry means (13) for entering information, said main face being adjacent to the detection face.
